# EUROPÄISCHE PATENTSCHRIFT

(11) **EP 1 431 259 B1**
(45) Veröffentlichungstag und Bekanntmachung des Hinweises auf die Patenterteilung: **12.07.2006**
(21) Anmeldenummer: 03019040.9
(22) Anmeldetag: 22.08.2003
(51) Int. Cl.: C04B 35/66, C04B 35/043, C04B 35/101, C04B 35/482, C04B 35/63

(54) **Nichtbasische feuerfeste Masse sowie deren Verwendung**
Non basic refractory mass and its use
Masse réfractaire non basique et son utilisation

(30) Priorität: 25.11.2002 DE 10255068
(43) Veröffentlichungstag der Anmeldung: 23.06.2004
(73) Patentinhaber: Refractory Intellectual Property GmbH & Co. KG, 1100 Wien (AT)
(72) Erfinder: Bugajski, Malgorzata, 8700 Leoben (AT); Dott, Karl-Heinz, 65232 Taunusstein (DE); Lueftenegger, Alfons, 1180 Wien (AT)
(74) Vertreter: Becker, Thomas

(56) Entgegenhaltungen:
- EP-A- 0 100 306
- EP-A- 0 425 086
- EP-A- 0 714 868
- EP-A- 0 758 632
- AU-A- 1 476 176
- CA-C- 1 298 323
- US-A- 3 856 538
- US-A- 3 897 256
- US-A- 4 061 501

## Beschreibung

Die Erfindung betrifft eine nichtbasische feuerfeste Masse sowie deren Verwendung.

Feuerfeste keramische Massen (Versätze) finden unter anderem Anwendung zur Herstellung hochtemperaturbeständiger Auskleidungen von Industrieaggregaten, insbesondere Gefäßen zur Herstellung und Behandlung von metallurgischen Schmelzen. Solche Auskleidungen können entweder als monolithische Massen aufgetragen werden (beispielsweise mit Gieß- oder Spritzverfahren). Die EP 0758632 A1 betrifft eine solche Masse, die aus 100 Gewichtsteilen Feuerfestmaterial und 1-30 Gewichtsteilen Teer besteht. Das Feuerfestmaterial besteht überwiegend aus Aluminiumoxid mit kleineren Anteilen an Ton. Nach einem Ausführungsbeispiel enthält die Masse auch 2,5 Gewichtsteile Natriumsilikat. Aus der Masse wird ein Fugenmörtel hergestellt. Die EP 0714868 A1 beschreibt eine Stichlochmasse auf Basis SiO₂, Al₂O₃, TiO₂ und Bindemittel.

Massen der genannten Art können aber auch zu feuerfesten Formteilen verarbeitet werden, beispielsweise zu Steinen, die dann, gegebenenfalls verklebt oder vermörtelt, zu einer Ausmauerung zusammengestellt werden. Die feuerfesten Formteile können auch großformatige Bauteile sein. Gemäß EP 0 100 306 A2 wird ein Verfahren zur Herstellung feuerfester Steine beschrieben, die auch bei C-Gehalten über 10 M.-% gute Festigkeit aufweisen.

In allen Fällen kommt es zu Verschleißerscheinungen des Feuerfestmaterials. Ursache hierfür können sein: die hohen Temperaturbeanspruchungen, häufige Temperaturwechsel und/oder chemische (metallurgische) Angriffe, beispielsweise durch aggressive Schlacken.

Um die Lebensdauer des noch brauchbaren Feuerfestmaterials auszunutzen, ist es bekannt, die schadhaften Stellen zu reparieren. Dies ist unproblematisch, wenn das defekte Feuerfestmaterial "kalt" ist. Dagegen bestehen große Schwierigkeiten bei der Reparatur von feuerfesten keramischen Bauteilen, wenn diese (noch) heiß sind. Weder Menschen noch Maschinen können bei möglichen hohen Temperaturen von über 1.000° C in unmittelbarer Nähe der heißen Flächen eingesetzt werden. Es würde aber Stunden oder Tage dauern, zum Beispiel eine Pfanne, einen Konverter oder dergleichen abkühlen zu lassen, nachdem die letzte Schmelze ausgetragen wurde, um eine akzeptable Temperatur für Reparaturarbeiten zu erreichen.

Es sind deshalb zahlreiche Versuche gemacht worden, derartige Reparaturmaßnahmen an dem defekten, noch heißen Feuerfestmaterial auszuführen.

Gemäß TAIKABUTSU OVERSEAS Vol.17 No.1, Seiten 39-47 stehen dazu im Wesentlichen zwei Massetypen zur Verfügung:
a) wässrige Gießmassen
b) nicht wässrige Mischungen.

Die wässrigen Mischungen gemäß a) werden auf die schadhaften Stellen der feuerfesten Auskleidung aufgebracht. Dabei können sich Nachteile durch plötzlich verdampfendes Wasser ergeben, was sogar zu Explosionen (Wasserdampf-Explosionen) führen kann. Wässrige Reparaturmassen härten zwar schnell aus, aber ihre Haltbarkeit ist deutlich geringer als die der nicht wässrigen Massen gemäß b). Nachteile können auch durch plötzliches Verdampfen des Wassers entstehen. Bei diesen Massen carbonisieren die Bindemittel. Die Kohlenstoffbindung führt zu einer hohen Heißfestigkeit. Diese nicht wässrigen Mischungen arbeiten unter Verwendung von Teer oder Harzen. Nachteilig ist, dass die Massen oft nicht ausreichend fließen, wenn sie auf das schadhafte Feuerfestmaterial aufgetragen werden, so dass sie Löcher, Risse oder dergleichen nicht 100 %-ig ausfüllen.

Eine Art "Mittelweg" zwischen a) und b) beschreibt die EP 0 558 675 B1, die eine trockene Feuerfestzusammensetzung vorschlägt, also aus einem trockenen feuerfesten keramischen Oxid aufgebaut ist, aber auch eine Komponente umfaßt, die gebundenes Wasser enthält. Wird diese Masse erhitzt, wenn sie auf die heiße schadhafte Feuerfestauskleidung aufgebracht wird, tritt das Kristallwasser aus und bewirkt, dass die ursprünglich trockene Feuerfestzusammensetzung fließen kann. Das Feuerfestmaterial ist basisch, besteht also überwiegend aus MgO.

Der Gehalt an Kristallwasser ist entscheidend für die Fließfähigkeit der Masse. Entsprechend ist der notwendige Wasserbedarf nur sehr schwer exakt einzustellen. Die Masse wird auch erst bei entsprechend hohen Temperaturen fließfähig. Sie ist damit faktisch ungeeignet, wenn schadhafte Stellen außerhalb eines horizontal verlaufenden Bodenbereiches verfüllt werden sollen.

Mit der EP 0 447 562 B1 wird ebenfalls eine feuerfeste Masse (ein Versatz) vorgeschlagen, der heben dem notwendigen Feuerfestaggregat ein Phenolharz umfaßt, wobei die Masse als Schlicker aufbereitet wird, die bereits bei normalen Temperaturen (Umgebungstemperatur) fließt. Die Verschleißfestigkeit dieser "Schlicker-Reparaturmasse" ist unzureichend. Phenolharz ist ein Bestandteil, der hinsichtlich seiner Umweltverträglichkeit häufig als kritisch eingestuft wird.

Mit der Erfindung soll eine Masse zur Verfügung gestellt werden, die die skizzierten Nachteile nicht aufweist. Die Masse soll insbesondere geeignet sein, Reparaturen an heißen Feuerfestenflächen vorzunehmen. Sie soll leicht konfektionierbar sein. Sie soll zumindest unmittelbar nach Kontakt mit der noch heißen Oberfläche der Feuerfestauskleidung möglichst gute Fließeigenschaften aufweisen, um sich gleichmäßig und mit hoher Dichte in und an den schadhaften Stellen auszubreiten. Sie soll außerdem am vorhandenen Feuerfestmaterial gut haften und rasch abbinden sowie in ihren weiteren Eigenschaften denen des feuerfesten Auskleidungsmaterials so weit wie möglich entsprechen.

Bei dem Versuch, möglichst viele der vorgenannten Aufgaben zu erfüllen, sind die Erfinder zunächst von folgender anwendungstechnischen Überlegung ausgegangen: Die Masse muß, wegen der Hitze, aus relativ großer Entfernung zu der zu reparierenden Stelle transportiert werden. Am Einfachsten ist dies möglich, wenn das Material zum Beispiel in einem Sack konfektioniert werden kann und wenn dieser Sack anschließend einfach auf die betroffene Stelle geworfen wird. Daraus resultieren folgende weitere Lösungsansätze: Das Material muß mehr oder weniger trocken sein, weil es sich als flüssiges Medium nur bedingt, insbesondere nicht über längere Zeit, bereitstellen läßt. Es muß andererseits aber unmittelbar nach dem Auftreffen auf der schadhaften Stelle die gewünschten Fließeigenschaften erfüllen, also eine entsprechende flüssige Phase bereitstellen und anschließend auf der Reparaturfläche gut haften.

Keine der zum Stand der Technik erwähnten bekannten Massen entspricht diesen Auflagen. Entweder sind die Massen bereits wässrig, oder ihre Fließfähigkeit erfolgt erst mit einer gewissen Zeitverzögerung.

Die Erfindung geht einen völlig anderen Weg und schlägt eine nichtbasische feuerfeste keramische Masse mit den Merkmalen von Anspruch 1 vor.

Wesentlicher Bestandteil (65 bis 90 M-%) der Masse ist ein nichtbasisches feuerfestes Material (in einer Kornfraktion < 15 mm oder auch < 10 mm oder < 8 mm).

Anstelle einer wässrigen Komponente oder einer Komponente, die unter Wärme Wasser freisetzt, beziehungsweise anstelle eines Pechs, Teers oder Harzes, umfaßt die Masse als weitere Komponente entweder
- eine Kombination mindestens einer phosphatischen und mindestens einer nicht wässrigen silikatischen Komponente, oder
- eine Kombination aus mindestens einer kohlenstoffhaltigen Komponente und mindestens einer nicht wässrigen silikatischen Komponente, wobei
- der Anteil der silikatischen Komponente mindestens 5 M.-% beträgt.

Diese Komponenten enthalten kein Kristallwasser oder zumindest keine wesentlichen Anteile an Wasser, schmelzen aber schnell, wenn sie höheren Temperaturen ausgesetzt werden. Es werden gezielt wasserfreie Komponenten ausgewählt, die jedoch leicht aufschmelzen. Dies führt dazu, dass die Komponenten anfangs trocken und fest sind, wenn sie mit dem feuerfesten Matrixmaterial vermischt und beispielsweise in Säcken konfektioniert werden. Dies ermöglicht es aber auch, wenn die Masse (der Sack) zum Beispiel auf eine schadhafte heiße Feuerfestauskleidung geworfen wurde, unmittelbar aufgrund der starken Erwärmung eine Schmelzphase innerhalb des Versatzes auszubilden, die der Masse die gewünschte Fließeigenschaft verleiht.

Die feuerfeste Körnung erhält auf diese Art und Weise ein "Schmiermittel", so dass die ursprünglich körnige (pulverige) Mischung nunmehr die gewünschten Fließeigenschaften erhält und sich ausbreiten und beispielsweise in Risse oder Löcher fließen kann.

Die ausgewählten phosphatischen beziehungsweise silikatischen Komponenten bilden dazu bei Temperaturen > 500° C eine Schmelzphase, wobei Temperaturen oberhalb 900° C für viele Anwendungen ausreichend sind.

Es ist besonders vorteilhaft, wenn die Komponenten derart ausgewählt werden, dass sie gemeinsam ein Eutektikum bilden, das heißt, zu einer Schmelzphase bereits bei einer Temperatur führen, die geringer ist als die Schmelztemperatur jeder einzelnen Komponente. Auf diese Weise kann die gewünschte Fließeigenschaft der Masse noch früher erreicht werden.

Der Anteil der nichtbasischen feuerfesten Matrixkomponente kann 67 bis 84 Massenprozent (M-%) betragen, nach einer weiteren Ausführungsform 70 bis 80 M-%.

Der Anteil der silikatischen Komponente beträgt beispielsweise bis 23 M-%.

Die silikatische Komponente kann in einer Kornfraktion < 0,3 mm vorliegen. Chemisch/mineralogisch kann die silikatische Komponente beispielsweise eines oder mehrerer der nachfolgenden Silikate umfassen: Calciumsilikat, Natriumsilikat, Borsilikat, Aluminiumsilikat. Die silikatische Komponente kann als Mehl (< 63 µm) aufbereitet sein. Sie kann ein reines silikatisches Glasmehl sein. Ebenso kann die silikatische Komponente als Glasur oder Fritte bereitgestellt werden.

Soweit die silikatische Komponente Calcium- und Natriumsilikat umfasst (Ca-Na-Silikat), kann das Verhältnis der Mol-Anteile SiO₂/CaO+Na₂O beispielsweise zwischen 30/70 und 90/10 liegen, also beispielsweise auch zwischen 60/40 und 80/20. Dabei kann das Verhältnis der Mol-Anteile CaO/Na₂O beispielsweise zwischen 10/90 und 90/10 liegen, also beispielsweise auch zwischen 40/60 und 60/40.

Das feuerfeste Matrixmaterial kann beispielsweise eine oder mehrere der folgenden Komponenten umfassen: Sintertonerde, Edelkorund, Normalkorund, MA-Spinell (MgO-Al₂O₃-Spinell), Bauxit, Andalusit, Mullit, Zirkonkorund, Zirkonmullit, Kaolin und/oder Ton.

Darüber hinaus kann mindestens eine der folgenden Komponenten dem Masseversatz zugegeben werden:
- Al₂O₃ (< 5 M-%),
- MgO (< 8 M-%),
- Mikrosilika (feinkörnige Kieselsäure) (< 2 M-%),
- Öl (beispielsweise Mineralöl (< 4 M-%),
wobei die in Klammern angegebenen Massenanteile Beispiele sind und auch höher liegen können. Mit Ausnahme des Öls werden diese Komponenten gezielt ausgewählt und eingesetzt, um abhängig von den Zusätzen, die für die Schmelzphase verantwortlich sind, durch Reaktionen hochschmelzende Phasen zu bilden. Damit wird die Beständigkeit des Reparaturmaterials erreicht.

Unabhängig von der Art der Zusammensetzung, abgesehen von den eingangs genannten Zwangskomponenten, sollte die Abstimmung der Komponenten so erfolgen, dass die Masse spätestens bei ihrer Anwendungstemperatur mindestens 15 M-% Schmelzphase bildet. Abhängig von der jeweiligen Anwendung kann der Mindestanteil an Schmelzphase auch > 20 M-% gewählt werden.

Die kohlenstoffhaltige Komponente kann beispielsweise Pech, Harz und/oder Teer umfassen. Diese sind zwar als Bestandteile feuerfester Massen zur Heißreparatur bekannt, wie eingangs ausgeführt. Bei den bekannten Anwendungen bilden Pech, Harz und/oder Teer aber die einzigen weiteren Komponenten neben dem feuerfesten Matrixmaterial und sind alleine für das Fließverhalten der Masse verantwortlich. Erfindungsgemäß finden diese Stoffe ohnehin nur in einer der eingangs genannten Alternativen Anwendung und darüber hinaus ausschließlich in Kombination mit mindestens einer silikatischen Komponente. Im Zusammenhang mit dem Merkmal, wonach die silikatische Komponente mindestens 2 M-%, nach einer weiteren Ausführungsform mindestens 5 M-% ausmachen soll, ergibt sich daraus eine entsprechende Reduzierung des Anteils an Pech/Teer/Harz, beispielsweise auf kleiner oder gleich 13 M-%, was auch unter umwelt-technischen Gesichtspunkten vorteilhaft ist.

Das erwähnte Al₂O₃ kann aus reaktiver Tonerde bestehen, also hochdispersem (besonders feinteiligem) Aluminiumoxid. Das erwähnte MgO kann beispielsweise aus feinkörnigem MgO (Sinter) bestehen, wobei das MgO im Zusammenhang mit dem nichtbasischen Matrixmaterial auf Basis Aluminiumoxid MA-Spinelle bei der Anwendung bilden kann.

Mikrosilika (feinkörnige Kieselsäure) kann mit dem Aluminiumoxid des Basismaterials zu Mullit reagieren.

Die phosphatische Komponente, beispielsweise Natriumphosphat, Kaliumphosphat, Silikophosphat ist nicht nur im relevanten Temperaturbereich (Heißtemperaturanwendung) schmelzflüssig, sondern sie unterstützt auch die keramische Bindung der Masse, die für eine hohe Festigkeit verantwortlich ist. Der Masseanteil der Phosphatkomponente liegt beispielsweise bei < 11 M-%.

Das erwähnte Öl dient insbesondere dazu, die ausschließlich trocken bereitgestellte Masse staubfrei zu halten.

Zumindest teilweise kann die nichtbasische feuerfeste Matrixkomponente durch eine basische feuerfeste Matrixkomponente ersetzt werden.

Nachstehend werden zwei Beispiele für erfindungsgemäße feuerfeste Massen angegeben. Beide sind geeignet, in erfindungsgemäßer Weise zur Heißreparatur von feuerfesten Auskleidungen an metallurgischen Schmelzgefäßen verwendet zu werden. Beide werden trocken bereitgestellt. Beide können in Sackform konfektioniert auf die zu reparierende schadhafte Stelle einer feuerfesten Auskleidung einfach aufgeworfen werden. Nachdem der Sack geplatzt ist und das Material der Masse mit der noch heißen Auskleidung in Kontakt steht, kommt es zur spontanen Ausbildung einer Schmelzphase zwischen den feuerfesten Matrixkörnern, so dass die Masse spontan fließt und Löcher, Zwickel oder sonstige schadhafte Stellen der feuerfesten Auskleidung ausfüllt. Beide Massen haften an der vorhandenen Auskleidung gut, binden schnell ab und führen zu hohen Feuerfestigkeiten, die mit denen der feuerfesten Auskleidung vergleichbar sind.

### Beispiel 1:

| | |
|---|---|
| Normalkorund 0,06 - 10,0 mm | 74,0 M-% |
| Reaktive Tonerde (< 10 µm) | 3,0 M-% |
| MgO-Sinter 0, 04 - 0,3 mm | 5,0 M-% |
| Mikrosilika | 0,5 M-% |
| Ca-Na-Silikat < 0,2 mm | 5,0 M-% |
| Pech | 9,0 M-% |
| Staubbindeöl | 3,5 M-% |
| | 100,0 M-% |

### Beispiel 2:

| | |
|---|---|
| Sintertonerde 0,045 - 6,0 mm | 60,0 M-% |
| MA-Spinelle 0,020 - 1,0 mm | 15,0 M-% |
| Ca-Na-Silikat < 0,2 mm | 20,0 M-% |
| Na-Phosphat | 3,0 M-% |
| Staubbindeöl | 2,0 M-% |
| | 100,0 M-% |

## Patentansprüche

1. Nichtbasische feuerfeste Masse, die
1.1 65 - 90 M-% nichtbasisches feuerfestes Material in einer Kornfraktion < 15 mm, und
1.2.1 10 - 35 M-% einer Kombination mindestens einer phosphatischen und mindestens einer nicht-wässrigen silikatischen Komponente, oder
1.2.2 10 - 35 M-% einer Kombination aus mindestens einer C-haltigen Komponente und mindestens einer nicht-wässrigen silikatischen Komponente enthält, wobei
1.3 der Anteil der silikatischen Komponente gemäß 1.2.1 und 1.2.2 mindestens 5 M-% beträgt und
1.4 die phosphatische und/oder silikatische Komponente bei Temperaturen > 500° C eine Schmelzphase bildet.

2. Masse nach Anspruch 1 mit einem Anteil des nichtbasischen feuerfesten Materials zwischen 67 und 84 M-%.

3. Masse nach Anspruch 1 mit einem Anteil des nichtbasischen feuerfesten Materials zwischen 70 und 80 M-%.

4. Masse nach Anspruch 1 mit einem Anteil der silikatischen Komponente zwischen 2 und 23 M-%.

5. Masse nach Anspruch 1, deren silikatische Komponente in einer Kornfraktion < 0,3 mm vorliegt.

6. Masse nach Anspruch 1, deren silikatische Komponente mindestens eine der folgenden Komponenten umfaßt: Calciumsilikat, Natriumsilikat, Aluminiumsilikat, Borsilikat.

7. Masse nach Anspruch 1, bei der die Komponenten so aufeinander abgestimmt sind, dass die Masse bei ihrer Anwendungstemperatur mindestens 15 M-% Schmelzphase bildet.

8. Masse nach Anspruch 1, bei der die Komponenten so aufeinander abgestimmt sind, dass die Masse bei ihrer Anwendungstemperatur mindestens 20 M-% Schmelzphase bildet.

9. Masse nach Anspruch 1, deren nichtbasisches feuerfestes Material mindestens eine der folgenden Komponeten umfaßt: Sintertonerde, Edelkorund, Normalkorund, MA-Spinell, Bauxit, Andalusit, Mullit, Zirkonkorund, Zirkonmullit, Kaolin, Ton.

10. Masse nach Anspruch 1, deren phosphatische Komponente in einem Anteil < 11 M-% vorliegt.

11. Masse nach Anspruch 1, deren C-haltige Komponente mindestens teilweise aus mindestens einer der folgenden Komponenten besteht: Pech, Teer, Harz.

12. Masse nach Anspruch 1, wobei der Anteil der C-haltigen Komponente < 13 M-% beträgt.

13. Masse nach Anspruch 1 mit mindestens einer der folgenden weiteren Komponenten:
- Al₂O₃ (< 5 M-%)
- MgO (< 8 M-%)
- Mikrosilika (feinkörnige Kieselsäure) (< 2 M-%)
- Öl (insbesondere Mineralöl) (< 4 M-%).

14. Masse nach Anspruch 1 mit mindestens einer der folgenden Komponenten: reaktive Tonerde, feinkörniger MgO-Sinter.

15. Masse nach Anspruch 1, bei der die Gesamtmenge an phosphatischer und silikatischer Komponente gemäß Merkmal 1.2.1 20-28 M-% beträgt.

16. Masse nach Anspruch 1, bei der die Gesamtmenge an C-haltiger und silikatischer Komponente gemäß Merkmal 1.2.2 12-18 M-% beträgt.

17. Verwendung der Masse nach einem der Ansprüche 1 bis 16 zur Heißreparatur von feuerfesten Auskleidungen an metallurgischen Schmelzgefäßen.

## Claims

1. Non-basic refractory mass comprising
1.1 65-90 M-% non-basic refractory material with a grain-size fraction of < 15 mm, and
1.2.1 10-35 M-% of a combination of at least one phosphatic and at least one non-aqueous silicatic component, or
1.2.2 10-35 M-% of a combination of at least one C-containing component and at least one non-aqueous silicatic component, wherein
1.3 the proportion of the silicatic component of 1.2.1 and 1.2.2 being at least 5 M-% and
1.4 the phosphatic and/or silicatic component forms a molten phase at temperature > 500°C.

2. Mass according to Claim 1, with the proportion of the non-basic refractory material between 67 and 84 M-%.

3. Mass according to Claim 1, with the proportion of the non-basic refractory Material between 70 and 80 M-%.

4. Mass according to Claim 1 with the proportion of the silicatic component between 2 and 23 M-%.

5. Mass according to Claim 1, whose silicatic component is present in a grain-size fraction < 0.3mm.

6. Mass according to Claim 1, whose silicatic component includes at least one of the following components: calcium silicate, sodium silicate, aluminum silicate, boron silicate.

7. Mass according to Claim 1, in which the components are proportioned in relation to each other so that the batch forms at least 15 M-% of a molten phase at the application temperature.

8. Mass according to Claim 1, in which the components are proportioned in relation to each other such that the batch forms at least 20 M-% of a molten phase at the application temperature.

9. Mass according to Claim 1, whose non-basic refractory material includes at least one of the following components: sinter alumina, high-grade corundum, standard corundum, MA-spinel, bauxite, andalusite, mullite, zirconium corundum, zirconium mullite, kaolin, clay.

10. Mass according to Claim 1, whose phosphatic component is present in a proportion < 11 M-%.

11. Mass according to Claim 1, whose C-containing component consists at least partly of one of the following components: pitch, tar, resin.

12. Mass according to Claim 1, where the proportion of the C-containing component is < 13 M-%.

13. Mass according to Claim 1, with at least one of the following additional components:
- Al₂O₃ (< 5 M-%)
- MgO (< 8 M-%)
- Micro-silica (fine-grained silicic acid) (< 2 M-%)
- Oil (in particular, mineral oil) (< 4 M-%).

14. Mass according to Claim 1, with at least one of the following components: reactive alumina, fine-grained MgO sinter.

15. Mass according to Claim 1, in which the total quantity of phospatic and silicatic components, per criterion 1.2.1 is 20-28 M-%.

16. Mass according to Claim 1, in which the total quantity of C-containg and silicatic components, per criterion 1.2.2, is 12-18 M-%.

17. Use of the mass according to one of the Claims 1 to 16 for the hot repair of refractory linings in metallurgical melting vessels.

## Revendications

1. Masse réfractaire non basique comprenant
1.1. 65 à 90 % en poids d'une matière réfractaire non basique en une fraction granulométrique < 15 mm, et
1.2.1. 10 à 35 % en poids d'une combinaison d'au moins un composant phosphaté et d'au moins un composant silicaté non aqueux, ou
1.2.2. 10 à 35 % en poids d'une combinaison d'au moins un composant carboné et d'au moins un composant silicaté non aqueux, où
1.3. la proportion de composant silicaté selon les points 1.2.1. et 1.2.2. atteint au moins 5 % en poids et
1.4. le composant phosphaté et/ou silicaté forme une phase fondue à des températures > 500°C.

2. Masse selon la revendication 1, ayant une proportion de matière réfractaire non basique située entre 67 et 84 % en poids.

3. Masse selon la revendication 1, ayant une proportion de matière réfractaire non basique située entre 70 et 80 % en poids.

4. Masse selon la revendication 1, ayant une proportion de composant silicaté située entre 2 et 23 % en poids.

5. Masse selon la revendication 1, dont le composant silicaté se présente en une fraction granulométrique < 0,3 mm.

6. Masse selon la revendication 1, dont le composant silicaté comprend au moins un des composants suivants : silicate de calcium, silicate de sodium, silicate d'aluminium, silicate de bore.

7. Masse selon la revendication 1, dans laquelle les composants sont mis en adéquation de sorte que la masse forme au moins 15 % en poids de phase fondue à sa température d'application.

8. Masse selon la revendication 1, dans laquelle les composants sont mis en adéquation de sorte que la masse forme au moins 20 % en poids de phase fondue à sa température d'application.

9. Masse selon la revendication 1, dont la matière réfractaire non basique comprend au moins un des composants suivants : terre d'argile frittée, corindon précieux, corindon normal, spinelle de MA, bauxite, andalousite, mullite, corindon de zircone, mullite de zircone, kaolin, argile.

10. Masse selon la revendication 1, dont le composant phosphaté se présente en une proportion < 11 % en poids.

11. Masse selon la revendication 1, dont le composant carboné se compose au moins partiellement d'au moins un des composants suivants : poix, goudron, résine.

12. Masse selon la revendication 1, où la proportion de composant carboné est < 13 % en poids.

13. Masse selon la revendication 1 comportant au moins un des autres composants suivants :
- Al₂O₃ (< 5 % en poids)
- MgO (< 8 % en poids)
- microsilice (acide silicique à fine granulométrie) (< 2 % en poids)
- huile (en particulier huile minérale) (< 4 % en poids).

14. Masse selon la revendication 1 comprenant au moins un des composants suivants : terre d'argile réactive, fritté de MgO à fine granulométrie.

15. Masse selon la revendication 1, dans laquelle la quantité totale de composant phosphaté et silicaté selon la caractéristique 1.2.1. atteint 20 à 28 % en poids.

16. Masse selon la revendication 1, dans laquelle la quantité totale de composant carboné et silicaté selon la caractéristique 1.2.2. atteint 12 à 18 % en poids.

17. Utilisation de la masse selon l'une des revendications 1 à 16 pour la réparation à chaud des habillages réfractaires sur les cuves de fusion métallurgiques.
